# EUROPÄISCHE PATENTSCHRIFT

(11) **EP 0 995 766 B1**
(45) Veröffentlichungstag und Bekanntmachung des Hinweises auf die Patenterteilung: **03.07.2002**
(21) Anmeldenummer: 99118950.7
(22) Anmeldetag: 27.09.1999
(51) Int. Cl.: C08G 59/40

(54) **Härter für Epoxidverbindungen, Verfahren zu ihrer Herstellung und Verwendung**
Hardener for epoxy resins, method for the production thereof and use thereof
Durcisseurs pour résines epoxydes, leur procédé de production et leur utilisation

(30) Priorität: 20.10.1998 DE 19848329
(43) Veröffentlichungstag der Anmeldung: 26.04.2000
(73) Patentinhaber: Bakelite AG, 58642 Iserlohn-Letmathe (DE)
(72) Erfinder: Palinsky, Andreas Dr., 47137 Duisburg (DE); Döring, Manfred Dr., 07778 Dorndorf-Steudnitz (DE); Dey, Holger, 47179 Duisburg (DE); Wuckelt, Jörg Dr., 07743 Jena (DE)

(56) Entgegenhaltungen:
- EP-A- 0 682 053
- DE-A- 1 495 452
- DE-A- 2 152 237
- DE-A- 3 737 464
- DE-A- 3 737 465
- US-A- 3 677 978

## Beschreibung

Die Erfindung betrifft latente Härter für Epoxidverbindungen auf der Basis von Verbindungen von Metallen.

Die Härtung von Epoxidharzen mit Metallkomplexen ist aus der Literatur bekannt: US-A 3,553,166, US-A 3,638,007, US-A 3,792,016, US-A 4,101,514 und DE-A 2300489 offenbaren verschiedene Metallkomplexe, die als Härter für Epoxidharze eingesetzt werden.

Sie haben alle den Nachteil, daß sie ihre härtende Wirkung erst oberhalb von 160 220°C mit einer für technische Erfordernisse ausreichenden Geschwindigkeit entfalten. Bei diesen hohen Temperaturen entstehen Spaltprodukte, die einen schlechten Netzwerkaufbau bewirken und somit negative Polymereigenschaften wie Schwindungsverhalten, Wasseraufnahme oder ähnliches bedingen.

Durch den kombinierten Einsatz dieser Härter mit Hilfsbasen lassen sich die Anspringtemperaturen etwas senken und die Beschleunigungswirkung steuern. Derartige Systeme sind einerseits kostenintensiv und haben den weiteren Nachteil, daß die Hilfsbasen mit Epoxidgruppen reagieren, was zu einer Verschlechterung der Polymereigenschaften führt.

WO 91/13925 offenbart Metallkomplexe, die als latente Härter für Epoxidharze verwendet werden können, die eine wesentlich niedrigere Anspringtemperatur haben. Diese Härter enthaltende Epoxidharzsysteme sind allerdings nur im Temperaturbereich bis 80°C lagerstabil.

Bei Verarbeitungstechnologien wie z.B. der RIM- oder RTM-Technologie werden jedoch Epoxidharz-Härter-Systeme gefordert, die bei Temperaturen bis zu 100°C mehrere Stunden lang stabil sind, die aber bei Temperaturen im Bereich von 120-160°C sehr schnell und möglichst vollständig aushärten.

Es ist daher Aufgabe der Erfindung, Härter für Epoxidverbindungen bereitzustellen, die als alleinige Härter eingesetzt werden können, die somit homogene Polymergemische ergeben, deren Mischungen mit Epoxidharzen bis zu Temperaturen von 100°C einige Stunden lang lagerstabil sind und die im Temperaturbereich von 120 - 160°C, bevorzugt im Temperaturbereich von 120 -140°C schnell und möglichst vollständig aushärten und die somit mittels RIM-, RTM- und vergleichbaren Verarbeitungstechnologien die Herstellung von Formteilen im Taktsystem und in guter Qualität ermöglichen.

Die Lösung der Aufgabe erfolgt durch Verwendung von Verbindungen der allgemeinen Formel

M(X)ₙ,

worin
- M: ein zwei- oder dreiwertiges Kation eines komplexbildenden Metalles,
- X: ein Anion eines Pseudohalogens und
- n: den Wert 2 oder 3
bedeuten, als alleinige Härter für Epoxidharze und Epoxidharze enthaltende Mischungen gemäß der Ansprüche 1 bis 4, sowie zur Verwendung der Epoxidharze und Härter enthaltenden Mischungen zum Einsatz in der RIM-, RTM-Technologie und vergleichbaren Formgebungsverfahren sowie als Klebmassen und zur Herstellung von Prepregs gemäß der Ansprüche 5 bis 7.

Aus DE-A 1 495 452, DE-A 2 152 237, CH-A 484 867 und aus CH-A 496 749 ist der

Einsatz von Metall-Pseudohalogenverbindungen in Epoxidharze enthaltenden Systemen bekannt. Jedoch dienen diese Verbindungen in diesen Systemen nicht als Härter sondern nur als Beschleuniger für die eigentlichen Härter. Durch Nebenreaktionen der Beschleuniger bei der Härtung entstehen in derartigen Systemen inhomogene Polymergemische.

Es wurde gefunden, daß Mischungen aus Epoxidharzen und Verbindungen der allgemeinen Formeln

M(X)ₙ ,

worin
- M: ein zwei- oder dreiwertiges Kation eines komplexbildenden Metalles,
- X: ein Anion eines Pseudohalogens und
- n: den Wert 2 oder 3
bedeuten, im Temperaturbereich bis 100°C ein bis mehrere Stunden verarbeitbar sind und im Temperaturbereich von 120-160°C schnell und möglichst vollständig aushärten, so daß auf eine Nachhärtung entsprechend hergestellter und gehärteter Formteile im wesentlichen verzichtet werden kann, daß somit diese Verbindungen als alleinige Epoxidharzhärter eingesetzt werden können, die zudem überraschenderweise in ihren Härtungseigenschaften dem für einige Anwendungen geforderten Eigenschaftsprofil entsprechen.

Es wurde zudem gefunden, daß Epoxidharze, die mit Verbindungen der allgemeinen Formeln

M(X)ₙ

gehärtet sind, worin M, X und n die oben angegebene Bedeutung haben, ein verbessertes

Brandverhalten zeigen. Entsprechende Mischungen benötigen, um eine definierte Schwerentflammbarkeit zu zeigen, etwa 30% weniger an zusätzlichen Flammschutzmitteln, als es bei Epoxidharzmischungen, die gemäß dem Stand der Technik gehärtet werden, notwendig ist.

Die erfindungsgemäßen Härter sind Verbindungen von komplexbildenden, zwei- oder dreiwertigen Metallionen mit Pseudohalogeniden.

Metallionen für diese Verbindungen sind Ionen zwei- oder dreiwertiger Hauptgruppenmetalle wie Mg-, Ca- oder Al-Ionen, sowie zwei- oder dreiwertige Ionen von Übergangsmetallen, insbesondere Mn-, Fe-, Co-, Ni-, Cu- oder Zn-Ionen.

Pseudohalogenide sind Ionen, die aus mindestens zwei elektronegativen Elementen bestehen. Beispiele hierfür sind Cyanat-, Cyanid-, Thiocyanat-, Selenocyanat-, Azidoder Cyanamid-Ionen. Bevorzugte Pseudohalogenide sind Cyanate und Thiocyanate.

Die Herstellung der Verbindungen gemäß der Formel M(X)ₙ erfolgt in an sich bekannter Weise durch stöchiometrische Umsetzung der Alkali- oder Ammoniumsalze der Pseudohalogenide mit Salzen der entsprechenden komplexbildenden Metalle in wäßriger Lösung.. Die Anionen dieser Salze können beliebig gewählt werden unter der Voraussetzung, daß diese Salze wasserlöslich sind. Bevorzugt werden möglichst preiswerte Salze, wie etwa Halogenide, Sulfate, Nitrate, Perchlorate oder Acetate.

Die erfindungsgemäßen Härter lassen sich leicht dosieren und bei Temperaturen im Bereich von 20 bis 100°C nach dem Schmelzen mit Epoxidharzen zu einer homogenen Mischung vermischen. Die Menge der eingestzten Härter liegt im Bereich von 0,5 bis 25 Gew%, bezogen auf die eingesetzten Epoxidverbindungen. Die Lösungen oder Mischungen aus Epoxidharz und erfindungsgemäßen Härtern sind bei Temperaturen bis 100°C ein bis mehrere Stunden lang verarbeitbar und härten bei Temperaturen im Bereich von 120-160°C, bevorzugt im Bereich von 120-140°C innerhalb weniger Minuten vollständig aus. Dabei treten keine unerwünschten Nebenreaktionen ein und es werden auch keine Neben- oder Abbauprodukte abgespalten.

Gehärtet werden können durch die erfindungsgemäßen Härter alle Epoxidverbindungen mit mehr als einer Epoxidgruppe. Bevorzugte Epoxidverbindungen sind Polyphenol-Glycidylether, z.B. solche auf Basis von Bisphenol A oder Bisphenol F oder epoxidierte Novolake, sowie Glycidylether des 4,4'-Diaminodiphenylmethans sowie glycidylierte Aniline.

Die Epoxidverbindungen können in an sich bekannter Weise mit üblichen Füll- und Zusatzstoffen sowie mit anderen reaktiven oder nicht reaktiven Oligomeren oder Polymeren, insbesondere mit Novolaken, zu entsprechenden Compounds gemischt werden.

Aufgrund des günstigen Reaktionsverhaltens, der langen Verarbeitbarkeitszeit bei Temperaturen bis zu 100°C, d.h., bei Temperaturen, bei der gängige Epoxidharze eine geringe Viskosität und damit gute Benetzungseigenschaften haben, und der raschen Aushärtung bei nur relativ geringfüggiger Erhöhung der Temperatur, eignen sich entsprechende Mischungen besonders für Injektionsverfahren wie z.B. das Reaktions-Injection-Molding- (RIM-) oder das Resin-Transfer-Molding- (RTM-) Verfahren und vergleichbare Formgebungsverfahren.

Die erfindungsgemäß verwendeten Härtern werden daher eingesetzt als Härter für Epoxidharze und Epoxidharze enthaltende Mischungen, insbesondere auch für Epoxidharze und Novolake enthaltende Mischungen. Sie werden bevorzugt verwendet als Härter für Epoxidharze enthaltende Mischungen für RIM-, RTM- oder vergleichbare Formgebungsverfahren sowie als Härter von Epoxidharzen enthaltenden Klebemassen oder Prepregs.

## Patentansprüche

1. Verwendung derVerbindungen der allgemeinen Formel
M(X)ₙ ,
worin
M ein zwei- oder dreiwertiges Kation eines komplexbildenden Metalles,
X ein Anion eines Pseudohalogens und
n den Wert 2 oder 3
bedeuten, als alleinige Härter für Epoxidharze und Epoxidharze enthaltende Mischungen.

2. Verwendung nach Anspruch 1, **dadurch gekennzeichnet, daß** die Pseudohalogenide Cyanate oder Thiocyanate sind.

3. Verwendung nach Anspruch 1 oder 2, **dadurch gekennzeichnet, daß** die Härter in einer Menge von 0,5 bis 25 Gew.%, bezogen auf die Menge der Epoxidverbindungen, eingesetzt werden.

4. Verwendung nach einem der Anprüche 1 bis 3, **dadurch gekennzeichnet, daß** die Mischungen auch Novolake enthalten.

5. Verwendung der Epoxidharze und Härter enthaltenden Mischungen gemäß einem oder mehreren der Ansprüche 1 bis 4 für RTM-, RIM- und vergleichbare Formgebungsverfahren.

6. Verwendung der Epoxidharze und Härter enthaltenden Mischungen gemäß einem oder mehreren der Ansprüche 1 bis 4 als Klebemassen.

7. Verwendung der Epoxidharze und Härter enthaltenden Mischungen gemäß einem oder mehreren der Ansprüche 1 bis 4 zur Herstellung von Prepregs.

## Claims

1. Use of compounds of the general Formula
M(X)ₙ ,
wherein
M is a bivalent or trivalent cation
X is an anion of a pseudohalogenide and
n has the value of 2 or 3,
as sole curing agents for epoxide resins and epoxide resins containing mixtures.

2. Use according to claim 1, **characterized in that** the pseudohalogenides are cyanates or thiocyanates.

3. Use according to claims 1 or 2, **characterized in that** the curing agents are used in an amount of 0.5 to 25 % by weight, based on the amount of epoxide compounds.

4. Use according to one of the claims 1 to 3, **characterized in that** the mixtures also contain novolacs.

5. Use of the epoxide resins and curing agents containing mixtures according to one or more of the claims 1 to 4 for RTM-, RIM- and comparable forming processes.

6. Use of the epoxide resins and curing agents containing mixtures according to one or more of the claims 1 to 4 for as adhesive compounds.

7. Use of the epoxide resins and curing agents containing mixtures according to one or more of the claims 1 to 4 for the preparation of prepregs.

## Revendications

1. Utilisation des composés de formule générale M(X)ₙ où
M représente un cation di- ou trivalent d'un métal complexant,
X représente un anion d'un pseudohalogène et
n représente la valeur 2 ou 3, comme uniques durcisseurs pour des résines époxydes et des mélanges contenant des résines époxydes.

2. Utilisation selon la revendication 1 **caractérisée en ce que** les pseudohalogénures sont des cyanates ou des thiocyanates.

3. Utilisation selon la revendication 1 ou 2 **caractérisée en ce que** les durcisseurs sont utilisés en une quantité de 0,5 à 25 % en masse par rapport à la quantité des composés époxydes.

4. Utilisation selon l'une des revendications 1 à 3 **caractérisée en ce que** les mélanges contiennent aussi des novolaques.

5. Utilisation des mélanges contenant des résines époxydes et des durcisseurs selon une ou plusieurs des revendications 1 à 4 pour des procédés de mise en forme RTM, RIM et des procédés de mise en forme comparables.

6. Utilisation des mélanges contenant des résines époxydes et des durcisseurs selon une ou plusieurs des revendications 1 à 4 comme masses adhésives.

7. Utilisation des mélanges contenant des résines époxydes et des durcisseurs selon une ou plusieurs des revendications 1 à 4 pour la production de préimprégnés.
